# EUROPÄISCHE PATENTSCHRIFT

(11) **EP 1 492 412 B1**
(45) Veröffentlichungstag und Bekanntmachung des Hinweises auf die Patenterteilung: **02.12.2009**
(21) Anmeldenummer: 03732272.4
(22) Anmeldetag: 03.04.2003
(51) Int. Cl.: A23K 1/00, A23K 1/18, A23P 1/02, A23P 1/12

(54) **FUTTERMITTEL FüR WASSERTIERE**
FEEDSTUFF FOR AQUATIC ANIMALS
ALIMENT DESTINE A DES ANIMAUX AQUATIQUES

(30) Priorität: 05.04.2002 DE 10215185
(43) Veröffentlichungstag der Anmeldung: 05.01.2005
(73) Patentinhaber: Tetra GmbH, 49324 Melle (DE)
(72) Erfinder: KÜRZINGER, Hubert, 49324 Melle (DE); KUHLMANN, Dietmar, 31655 Stadthagen (DE); SCHMIDT, Hartmut, 49124 Georgsmarienhütte (DE)
(74) Vertreter: Zimmermann & Partner
(86) Internationale Anmeldenummer: PCT/EP2003/003493
(87) Internationale Veröffentlichungsnummer: WO 2003/084341

(56) Entgegenhaltungen:
- DE-A- 3 212 406
- GB-A- 1 351 878
- US-A- 4 413 014
- US-A- 4 542 686
- US-A- 5 128 153
- US-B1- 6 174 552
- "Drug delivery to cultivated fishes - by coating fish food with insoluble edible film carrying the drug" DERWENT, XP002249012

## Beschreibung

Die Erfindung betrifft ein neuartiges Futtermittel für Wassertiere, insbesondere für Warm- und Kaltwasserzierfische und Reptilien im Süß- und Seewasser.

Bei der Haltung solcher Wassertiere treten immer wieder Probleme auf, sowohl bezüglich einer ausgewogenen, artgerechten Ernährung, als auch einer angemessenen Behandlung mit Wirkstoffen zur Behandlung oder Vorbeugung von Krankheiten.

Bei der Pflege, Zucht und Haltung von Wassertieren treten in Hobbyaquarien und Teichen und in noch stärkerem Maße in den Intensivhaltungsanlagen von Fischfarmen und Aquakulturen Erkrankungen auf, die zu erheblichen finanziellen Verlusten führen können. Dabei kommen als fischpathogene Organismen Viren der verschiedensten Gattungen, Bakterien, Pilze, Dinoflagellaten, Protozoen, Helminthen oder fischparasitäre Krebse vor.
Die Behandlung von dadurch verursachten Fischkrankheiten erfolgt einerseits durch die sogenannte Badtherapie, bei der Wirkstoffe dem Hälterungswasser in geeigneten bioziden Konzentrationen zugesetzt werden, andererseits durch eine orale oder enterale Wirkstoffverabreichung (Medizinalfutter oder orale Fertigarzneimittel) oder parenterale Wirkstoffapplikation. Diese Wirkstoffverabreichung erfolgt bislang in besonderen Darreichungsformen, getrennt von dem üblichen Futterangebot.

Bei der Ernährung von Wassertieren mit den üblichen Futtermitteln ist es schwierig, den Nährstoffanforderungen der Wassertiere zu genügen. Eine Vielzahl von gesundheitlichen Problemen bei Wassertieren ist auf eine unausgewogene Ernährung zurückzuführen. Mängel der herkömmlichen Futtermittelmischungen sind z.B. unausgeglichener Eiweißgehalt, Mangel an essentiellen Aminosäuren, unzureichender Vitamingehalt oder unzureichender Mineralstoffgehalt. Solche Mangelerscheinungen steigern bei Fischen die Anfälligkeit für Krankheiten und Infektionen.

Bekannt sind Fischfutter in Form von Flocken, Pellets, Sticks oder Granulaten, die aus jeweils einer Futtersorte bestehen oder Futtergemische die aus mehreren Futtersorten zusammengesetzt sind und ggf. auch medikamentöse Zusätze enthalten. Allgemein üblich ist Fischfutter, dem Vitamine, Minerallen, Fette usw. beigemengt sind, wobei dieses Futter eingefärbt sein kann. In der Regel enthält die Rezeptur konzentriert eine Vielzahl von lebenswichtigen Nährstoffen, Vitaminen und Spurenetementen, die der Rohfuttermischung vor der Endverarbeitung zu Flocken, Pellets, Sticks oder Granulaten zugemischt werden. Für Flockenfutter, das aus den unterschiedlichsten Zutaten bestehen kann und in unterschiedlicher Flockengröße angeboten wird, ist das Angebot sehr vielfältig.
Bei der Fütterung besteht das Problem, dass in Teichen oder Aquarien in der Regel neben anderen Wassertieren insbesondere Fische mehrerer Arten gemeinsam gehalten werden, die ein ganz unterschiedliches Fressverhalten aufweisen können.
So gibt es Fische, die als Bodenfresser bezeichnet werden, weil sie ihre Nahrung in unmittelbarer Bodennähe zu sich nehmen. Andere dagegen nehmen das Futter direkt unterhalb der Wasseroberfläche auf und wieder andere suchen sich ihre Nahrung im Bereich dazwischen. Es gibt Fische, die Futter, das nicht in der richtigen Wassertiefe angeboten wird, unbeachtet lassen. Um diesen Fressgewohnheiten gerecht zu werden, sollte das Schwimm- und Sinkverhalten des Futters so eingestellt werden, dass es möglichst lange auf der jeweils gewünschten Höhe verbleibt. Dies ist bei den üblichen "Einheitsfuttern" schwierig und gelingt nur begrenzt.

US 5128153 beschreibt ein Fischfutterpellet, welches zunächst schwimmt, wobei sich eine äußere Schicht des Futters loslöst, langsam zum Grund eines Aquariums sinkt, wo sich eine zweite Futterschicht ablöst, und mit dem Rest des Pellets zur Oberfläche zurückkehrt.

GB 1351878 beschreibt einen Futterkörper für Fische und ähnliche Wassertiere in Form eines gestreckten Riegels, der eine Vielzahl in Abständen angeordneten Abschnitte umfasst, von welchen jeder mindestens eine querlaufende Schicht von Futter enthält, welches sich in Wasser aufweichen lässt, und eine relativ härtere querlaufende Grenzschicht enthält, die nur langsam in Wasser löslich ist, und welche zwischen jeden angrenzenden Abschnitt positioniert ist.

DE 3212406 beschreibt eine Futterfolie, insbesondere für Heimtiere, wie Aquarienfische, bei welcher unter anderem zur Vermeidung von Inkompatibilitäten Farb-, Hilfs-, Nähr- und oder Wirkstoffe mittels Druck- oder Preßverfahren in mindestens einer zweiten Schicht mittels eines Klebers/Bindemittels auf die Oberfläche der eigentlichen Folie aufgebracht sind.

Aus US 4413014 ist ein Fischfutter oder Köder bekannt, der einen essbaren porösen Teil, wie zum Beispiel einen getrockneten Maiskolben enthält, welcher von einem Fischlockmittel oder einem Nährstoff durchtränkt ist.

Nachteilig daran ist, dass nicht aufgenommenes Futter zu Boden sinkt, das Wasser trübt und die Wasserqualität negativ beeinflußt. Dies gilt besonders für nicht aufgenommenes Flockenfutter, welches das Wasser sehr stark trüben kann, so dass ein Wasserwechsel erforderlich wird und Aquarien oder Fischteiche häufiger gereinigt werden müssen.

Weiterhin besteht das Problem, dass die Herstellungsverfahren für herkömmliches Fischfutter bei relativ hohen Temperaturen durchgeführt werden müssen, um für alle Bestandteile eine ausreichende Homogenlsierung, Sterilisierung oder Trocknung zu erreichen. Hierbei leidet die Qualität des Futters sehr, wenn es hitzeempfindliche Bestandteile, wie z.B. Vitamine enthält. Während des Erhitzens besteht auch die Gefahr, dass z.B. die pflanzlichen und tierischen Proteine koagulieren und denaturieren. Es können auch wasserdampflösliche Bestandteile verloren gehen. Die einzelnen Rohmaterialien weisen also unterschiedliche physikalische und chemische Eigenschaften auf, woraus folgt, dass sie, um nicht geschädigt zu werden, eigentlich getrennt unter unterschiedlichen und den einzelnen Bestandteilen angepassten Bedingungen zum Endprodukt verarbeitet werden müssten. Werden sie - wie üblich - gemeinschaftlich einem einheitlichen Herstellungsprozess unterworfen, verlieren sie an ernährungsphysiologischem Wert, und empfindliche biologische Wirkstoffe sind nur noch sehr begrenzt wirksam. Um derartige Verluste von vornherein auszugleichen, hat man bisher empfindliche Futterbestandteile in sehr hohen Konzentrationen eingesetzt. Nur so erreichte man es, dass am Ende des Herstellungsverfahrens ausreichende Mengen an nährstoffreichen Inhaltsstoffen wie Vitaminen, Proteinen oder essentiellen Fettsäuren für die Tiere zur Verfügung standen.

Da es also schwierig ist, alle Nährstoffe und Wirkstoffe in einem einzigen Futtermittel zu vereinen, hat man bisher unterschiedliche Zubereitungen, wie Spezialflocken oder Granulate, in getrennten Verfahren hergestellt, und sie dann in einem weiteren Arbeitsgang im gewünschten Verhältnis miteinander gemischt. Wenn aber verschiedene Futter als Mischung in den Handel kommen, kann man beobachten, dass die Wassertiere nach bestimmten Futtersorten oder sichtbaren Bestandteilen zuerst schnappen und andere ablehnen. Es hat sich in der Praxis nämlich gezeigt, dass z.B. Fische bei entsprechendem Angebot ihr Futter nach Geruch, Geschmack und Farbe auswählen. Es hat sich auch gezeigt, dass Fische buntes, mehrfarbiges Futter wesentlich problemloser und leichter aufnehmen als einfarbiges. Abgesehen davon, dass die Tiere das Futter auf diese Weise nicht in dem vom Halter geplanten Mischungsverhältnis aufnehmen, besteht bei mangelnder Filterleistung dann die Gefahr, dass der Rest nicht akzeptierten Futters im Wasser oder auf dem Bodengrund verbleibt und verdirbt.
Aus einer solchen Futterauswahl, die man auch als selektives Fressen bezeichnet, resultiert häufig Fehlernährung mit den bekannten gesundheitlichen Nachteilen für die Tiere.
Da diese Probleme bekannt sind, werden auch verschiedene Futtersorten in Behältnissen mit mehreren Kompartimenten angeboten und müssen vom Halter manuell dosiert werden. Hier werden aber die für die Tiere günstigsten Mengenverhältnisse der Komponenten vom Halter oft falsch bemessen, so dass über längere Zeiträume, zuviel nährstoffreiches Futter oder zu wenig essentielle Bestandteile verabreicht werden, was wiederum zu Fehlernährung, wie z.B. Verfettung oder Mangelerscheinungen und bei empfindlichen Tieren sogar zum Tod führen kann.

Der Erfindung liegt daher die Aufgabe zugrunde, die bekannten Futtermittel für Wassertiere, wie sie oben beschrieben sind, dahingehend zu verbessern, dass das selektive Fressen mit den beschriebenen Nachteilen verhindert wird und ein entsprechendes, breit anwendbares, preisgünstiges, leicht herstellbares und obendrein optisch nicht nur für die Tiere sehr attraktives Futter bereitgestellt wird. Weiterhin ist es Ziel der Erfindung, eine gemeinsame Applikation von Futter und Medikamenten bei Wassertieren zu ermöglichen, insbesondere, wenn die Medikamente aufgrund ihres Eigengeschmacks sonst nur schwer applizierbar sind.

Erfindungsgemäß wird diese Aufgabe durch ein Futter gelöst, welches in einstückigen Einheiten mindestens zwei extrudierte Futtermischungen verschiedener Zusammensetzung enthält und dadurch gekennzeichnet ist, dass die einstückigen Einheiten aus mindestens zwei aneinander angrenzenden und ineinander übergehenden Bereichen oder Segmenten bestehen, die die Futtermischungen getrennt voneinander enthalten.
Die einstückigen Einheiten weisen also mindestens einen ersten Bereich und einen zweiten Bereich aus, die sich aneinander anschließen.

Gegenstand der Erfindung ist somit ein Futter für Wassertiere, welches in einstückigen Einheiten mindestens zwei extrudierte Futtermischungen unterschiedlicher Zusammensetzung enthält und dadurch gekennzeichnet ist, dass die einstückigen Einheiten aus mindestens zwei aneinander angrenzenden und ineinander übergehenden Bereichen bestehen, die die Futtermischungen getrennt voneinander enthalten.

Ein weiterer Gegenstand der Erfindung ist ein Verfahren zur Herstellung eines Futtermittels für Wassertiere, das dadurch gekennzeichnet ist, dass man mindestens zwei extrudierte Futtermischungen unterschiedlichen Inhalts oder unterschiedlicher Farbe in Futtereinheiten überführt, die aus mindestens zwei aneinander angrenzenden und ineinander übergehenden Bereichen bestehen, die die Futtermischungen getrennt voneinander enthalten.

Mit Hilfe des neuartigen Futters können Wassertiere auf einfache und praktische Art und Weise ausgewogen ernährt und - wenn erforderlich - gleichzeitig zur Prävention oder Behandlung von Krankheiten behandelt werden.
Durch die feste Verbindung der ansonsten voneinander getrennten Bestandteile haben die Wassertiere keine Möglichkeit mehr, Futterbestandteile selektiv aufzunehmen. Wenn sie ein an seiner Farbe oder seinem Geruch erkanntes "Lieblingsfutter" aufnehmen wollen, müssen sie auch den damit verbundenen, weniger geschätzten Teil in Kauf nehmen, der in seiner Menge und Zusammensetzung, bezogen auf den ersten Teil, genau nach den Bedürfnissen des Tieres zudosiert ist. Damit werden Mangelerscheinungen und alle anderen oben beschriebenen Nachteile auf einfachste Weise sicher vermieden.
Das erfindungsgemäße Futtermittel erlaubt damit eine optimale Anpassung an die Ernährungsbedürfnisse der einzelnen Wassertiere. Ein weiterer Vorteil ist, dass bei der Lagerung miteinander unverträgliche Futter- oder Wirkstoffbestandteile sich nur auf minimaler Fläche berühren, so dass sie sich im fertigen Futter nicht gegenseitig stören können und unerwünschte Einwirkungen vermieden werden.

Demgemäß werden für die einzelnen Bereiche der Futtereinheit unterschiedliche Futter-Rohstoffmischungen bereitgestellt, deren Herstellungsverfahren an die chemischen und physikalischen Eigenschaften und die Stabilität der Einzelbestandteile genau angepaßt werden können. So kann das Herstellungsverfahren für alle Bestandteile auf die schonendst mögliche Art durchgeführt werden. Lebensnotwendigen Inhaltsstoffe bleiben erhalten und eine Denaturierung wird vermieden. Da sich eine prophylaktische Überdosierung, die zu erwartende Verluste während der Herstellung und Lagerung ausgleichen soll, erübrigt, kann eine geringere Menge an Grundstoffen eingesetzt werden, was im Hinblick darauf, dass es sich bei Fischfutter um ein Massenprodukt handelt, erhebliche Einsparungen ermöglicht.
Die Futtereinheiten nach der Erfindung werden erhalten, indem die Ausgangsmischungen für die einzelnen Bereiche einer Einheit in für die jeweiligen Inhaltsstoffe verträglichster und günstigster Weise hergestellt und zum Beispiel für ein Extrusionsverfahren vorbereitet werden.
Im einfachsten Fall werden verschiedene und möglichst auch farblich unterschiedlich gekennzeichnete Futtermischungen mittels einem oder mehreren Extrudern in getrennten Schneckengängen extrudiert und in einer Vorrichtung weiterverarbeitet, die die getrennten Stränge in gewünschter Weise so zusammenführt, dass der durch eine Austrittsöffnung oder Mischdüse austretende Futterstrang die aneinander angelagerten Futtermischungen aller Bereiche enthält, wobei der Strang im Querschnitt die Bereiche optisch als voneinander getrennte Zonen aufweist. Das Bild eines solchen Querschnitts kann beispielsweise marmoriert sein. Es kann der erste Bereich, bei einem kreisförmigen Querschnitt des Strangs auch einen kleinen Kreis in der Mitte bilden, der von einem konzentrischen Ring des zweiten Bereichs eingefasst ist. Ein weitere Möglichkeit ist die Aufteilung der Bereiche in zwei halbmondförmige Hälften gleicher Größe.
Es können auch mehrere dünne Stränge zu einem dicken Strang zusammengefasst werden . Dadurch entstehen im Querschnitt gepünktelt oder kariert erscheinende Muster. Die Technik solcher mehrfarbigen Extrudate ist aus dem Gebiet der Lebensmitteltechnologie bereits bekannt. Jedenfalls sind verschiedenfarbige "Stränge" mit mehreren farblich gekennzeichneten Inhaltsstoffen optisch nichts Besonderes mehr, seit es die bekannten bunten Zahnpasten gibt.
Die so erhaltenen mehrfarbigen Stränge werden nach dem Verlassen des Extruders mit rotierenden Messern praktischerweise in Scheibchen einer Dicke von 0,3 bis 3 mm geschnitten, so dass deren Durchmesser möglichst die Dicke deutlich übersteigt. Dadurch wird sichergestellt, dass jedes Scheibchen auf eine flache Seite zu liegen kommt. Die Scheibchen werden dann über eine Vibrationsrinne so aufgeteilt, dass sie, wie Plätzchen auf einem Backblech, voneinander getrennt einem Walzenstuhl zugeführt werden können. Der Abstand der Scheibchen voneinander wird so eingestellt, dass sich deren Ränder auch dann, wenn die Scheibchen die Presswalzen durchlaufen haben, nicht berühren. Wenn die Scheibchen die Walzen durchlaufen haben, beträgt der Durchmesser der erhaltenen Flocken etwa 5 bis 50 mm, bevorzugt 3 bis 10 mm und die Dicke liegt im Bereich von 0,03 bis 0,3 mm, für Aquarienfische bevorzugt im Bereich von 0,07 bis 0,15 mm. Der Plättchendurchmesser wird durch den Durchmesser der Austrittsöffnung der Mischdüse bestimmt, wobei sich der Durchmesser nach Verlassen der Düse durch Expansion vergrößern kann. Die endgültige Größe muß demnach je nach Material durch eine Probecharge bestimmt und eingestellt werden. Durch den Pressvorgang des Walzenstuhls erhält man dünne Futterflocken, deren Form weitgehend dem Querschnitt der Stränge entspricht, wobei natürlich der Querschnitt beim Auswalzen erheblich zunimmt und die Dicke schließlich nur noch einen Bruchteil der Dicke der Plättchen beträgt. Aus einem Strang mit kreisförmigem Querschnitt erhält man folglich auch annähernd kreisförmige Futterflocken. Mit entsprechend geformten Austrittsöffnungen läßt sich der Querschnitt der vereinigten Stränge und damit die Form der Futterflocken beinahe beliebig variieren.

Die Futtereinheiten können Bereiche ganz unterschiedlicher Zusammensetzung aufweisen, wobei zum Beispiel fettreiche und fettarme Bereiche miteinander kombiniert werden können. So wird eine Matrix in der Futtereinheit bereitgestellt, die es ermöglicht sowohl fettlösliche als auch fettunlösliche Nährstoffe gleichzeitig anzubieten.
So kann auch durch eine geeignete Kombination von fettarmen und fettreichen Bereichen in einer Futtereinheit das an die Freßgewohnheiten der Wassertiere angepaßte Schwimm- oder Sinkverhalten von Futterflocken eingestellt werden.
In einer anderen Ausführungsform wird das Sinkverhalten der Futtereinheiten gesteuert durch Auswahl und Kombination geeigneter expandierter und nicht expandierter Bereiche, die eine unterschiedliche Dichte aufweisen. Eine Ausführungsform mit Bereichen unterschiedlichen spezifischen Gewichts besteht z. B. aus einem fettreichen Kern und im Außenbereich aus einer Proteinschaumhülle.
Eine weitere Ausführungsform enthält wasserlösliche Substanzen, die dem Futter nach dem Kontakt mit Wasser durch die Auflösung einen gewissen Vortrieb auf der Wasseroberfläche verleihen, so dass das Futter durch seine sichtbare Bewegung für die Tiere besonders attraktiv wird.
Eine weitere Ausführungsform weist unterschiedlich gefärbte Bereiche auf, wobei es sich bei den farbverstärkenden Zusätzen z.B. um Carotinoide handeln kann, die einerseits der besseren Attraktivität und Akzeptanz des Futters durch die Wassertiere dienen, und andererseits auch der Intensivierung der natürlichen Farbenpracht, z.B. von Zierfischen, hier speziell der gelben, orangefarbenen und roten Farbpigmente, dienen.
Grüngefärbte Bereiche können beispielsweise angereichert sein mit Pflanzenextrakten und Pflanzeninhaltsstoffen oder Algen, abgestellt auf die spezifischen Ernährungsgewohnheiten von Wassertieren.
Zur Verbesserung der allgemeinen Kondition und der Vorbeugung gegen Stress können den Bereichen hohe Konzentrationen an Vitaminen zugesetzt werden. Um eine erhöhte Resistenz gegen Krankheiten zu erreichen, können Bereiche vorgesehen werden, die mit Wirkstoffen angereichert sind, die antimikrobielle, probiotische, antioxidative und/oder immunstimulierende Eigenschaften aufweisen. Es können auch Bereiche vorgesehen werden, die mit Wirkstoffen zur Behandlung oder zur Vorbeugung von Krankheiten angereichert sind.
Für eine bessere Futterverwertung und geringere Wasserbelastung können in einzelnen Bereichen sehr gut verdauliche Rohstoffe eingesetzt werden, wie z.B. Phosphate tierischen Ursprungs.

Für die Herstellung mehrfarbiger Futter eignen sich aufgrund ihrer Eigenfärbung oder Farbmodifikation besonders folgende Futterbestandteile:
Carotinoide (rot/gelb): Paprikaöl, Bixin, β-Carotin, Astaxanthin, Canthaxantin.
Algen: (grün): Spirulina, Wakame-Algen und Seetang. Carotinoide und Algen ergeben in einer Zugabemenge von 1 bis 8 Gew.% eine brauchbare Färbung, die durch weitere Farbstoffe verstärkt oder im Ton verändert werden kann.
Als Naturbestandteile eignen sich besonders: Krill, Artemia, Mückenlarven, Wasserflöhe, Plankton, Thunfischöl und Omega-3-Fettsäuren. Diese Bestandteile besitzen eine angenehm gelblich-braune Eigenfärbung, die als solche genutzt oder mit anderen Farbträgern abgewandelt oder verstärkt werden kann.
Als künstliche aber futterrechtlich unbedenkliche Farbkomponenten eignen sich besonders: E 102, Yellow No.5, Yellow No.6, E127, Red No.3, E132, Blue N0.2. Die Farbstoffe werden in einer Menge von bevorzugt 0,1-1 Gew.% zugefügt.

Die Futtereinheiten können, angepaßt an die Größe und das Fressverhalten der Wassertiere, in Form von Flocken, Sticks, Granulaten, Pellets oder Tabletten bereitgestellt werden.
Die Herstellung des erfindungsgemäßen Futters in der beschriebenen Flockenform ist besonders vorteilhaft und bevorzugt.

Die in der Beschreibung und den Ansprüchen dargelegten Merkmale der Erfindung können sowohl einzeln als auch in beliebiger Kombination für die Verwirklichung der Erfindung in ihren verschiedenen Ausführungsformen wesentlich sein.

Das folgende Beispiel dient zur Erläuterung der Erfindung:

### BEISPIEL

Die Futterbereiche des Beispiels unterscheiden sich aus Gründen der besseren Anschaulichkeit inhaltlich lediglich durch verschiedene Farbstoffe, welche die Aufteilung des Endprodukts in farblich gekennzeichnete Bereiche sichtbar machen.

### Zubereitung der Basisrezeptur:

Zunächst wird eine übliche und für die Bearbeitung im Extruder geeignete Basisrezeptur erstellt, welche die gemeinsamen Grundstoffe beider Futterbereiche enthält. Diese sind typisch für ein Futter für Süß- und Meerwassertiere und bestehen aus Fisch- und Fischnebenerzeugnissen, Getreide, pflanzlichen Eiweißextrakten, Hefen, Weichtieren, Krebstieren, Ölen, Fetten, Algen, Mineralstoffen, Lezithin und Antioxidantien.
Aus diesen Grundstoffen wird ein übliches Futtergemisch zubereitet, das in den Extruder eingeführt werden kann.

### Zubereitung von Futterflocken mit zwei farblich unterschiedlichen Bereichen:

Der Farbstoff für den ersten Bereich ist Red No.3, Dye.
Dieser wird bei Raumtemperatur homogen in Wasser eingemischt. Die so entstandene "Dosierflüssigkeit 1" besteht somit aus 2,5 % Red No.3, Dye und 97,5 % Wasser.
Der Farbstoff für den zweiten Bereich ist Yellow No.5, Dye. Dieser wird bei Raumtemperatur homogen in Wasser eingemischt. Die so entstandene "Dosierflüssigkeit 2" besteht somit aus 6% Yellow No. 5, Dye und 94 % Wasser.

Einem Zweiwellenextruder werden 50 kg/h der Basisrezeptur im Einzugsbereich zudosiert. Weiterhin werden im Einzugsbereich 11,5 kg/h Wasser injiziert. Beides wird bei einer Temperatur von etwa 100°C homogen zu einer zähflüssigen Masse vermischt. Am Ende des Zweiwellenextruders wird die Masse auf zwei Einwellenextruder aufgeteilt. In dem einen Einwellenextruder erfolgt die Zugabe der "Dosierflüssigkeit 1" mit 1 kg/h. Die "Dosierflüssigkeit 1" wird homogen in die Masse eingemischt. In dem zweiten Einwellenextruder erfolgt die Zugabe der "Dosierflüssigkeit 2" ebenfalls mit 1 kg/h . Am Austritt der Einwellenextruder liegt je ein rot und ein gelb eingefärbter Massestrom vor.

Durch Führungs- und Verteilkanäle werden die eingefärbten Masseströme in einer Düsenplatte so zusammengeführt und auf 20 Austrittsöffnungen bzw. Mischdüsen verteilt, dass aus jeder Austrittsöffnung ein zweifarbiger Strang austritt, bei dem die Farben auf zwei konzentrische Querschnittsflächen aufgeteilt sind. Diese Stränge werden mit einem rotierendem Messer in Scheiben von 3 mm Durchmesser und einer Dicke von 1 mm geschnitten, einem Walzwerk zugeführt und zu zweifarbigen Flocken einer Dicke von 0,1 mm ausgewalzt.

## Patentansprüche

1. Futter für Wassertiere, welches zur Verhinderung selektiven Fressens geeignet ist und in einstückigen Einheiten mindestens zwei extrudierte Futtermischungen unterschiedlicher Zusammensetzung enthält, wobei die einstückigen Einheiten aus mindestens zwei aneinander angrenzenden und ineinander übergehenden Bereichen bestehen, die die Futtermischungen getrennt voneinander enthalten.

2. Futter nach Anspruch 1, **dadurch gekennzeichnet, dass** die einzelnen Bereiche unterschiedliche Färbungen aufweisen.

3. Futter nach Anspruch 1, **dadurch gekennzeichnet, dass** mindestens ein Bereich fettreiches Futter enthält. '

4. Futter nach Anspruch 3, **dadurch gekennzeichnet, dass** das fettreiche Futter lipophile Zusätze enthält.

5. Futter nach Anspruch 1, **dadurch gekennzeichnet, dass** mindestens ein Bereich fettarmes Futter enthält.

6. Futter nach Anspruch 1 bis 5, **dadurch gekennzeichnet, dass** Bereiche mit wasserlöslichen Nähr-und/oder Wirkstoffen eine Fettmatrix aufweisen.

7. Futter nach Anspruch 1 bis 6, **dadurch gekennzeichnet, dass** dessen Schwimm- und Sinkverhalten durch eine Kombination von Bereichen verschiedener Dichte eingestellt ist.

8. Futter nach Anspruch 7, **dadurch gekennzeichnet, dass** die Dichte durch eine Kombination von Bereichen verschiedenen Fettgehalts eingestellt ist.

9. Futter nach Anspruch 7, **dadurch gekennzeichnet, dass** die Dichte durch eine Kombination von Bereichen mit unterschiedlicher Expansion eingestellt ist.

10. Futter nach Anspruch 1 bis 9, **dadurch gekennzeichnet, dass** es wasserlösliche Substanzen enthält, die dem Futter beim Auflösen im Wasser einen Vortrieb verleihen.

11. Futter nach Anspruch 1 bis 10, **dadurch gekennzeichnet, dass** es als ersten Bereich einen fettreichen Kern und als zweiten Bereich eine Proteinschaumhülle aufweist.

12. Futter nach Anspruch 1 bis 11, **dadurch gekennzeichnet, dass** mindestens ein Futterbereich Enzyme, Probiotika, Immunmodulatoren, Vitamine, Aminosäuren, Fettsäuren, Zucker, Phospholipide, Proteine, Antioxidantien und/oder Pflanzenextrakte enthält.

13. Futter nach Anspruch 1 bis 12, **dadurch gekennzeichnet, dass** die Futtereinheit als Flocke, Granulat, Stick, Pellet oder Tablette ausgebildet ist.

14. Verfahren zur Herstellung eines Futtermittels für Wassertiere, welches geeignet ist selektives Fressen zu verhindern, **dadurch gekennzeichnet, dass** man mindestens zwei extrudierte Futtermischungen unterschiedlichen Inhalts oder unterschiedlicher Farbe in Futtereinheiten überführt, die aus mindestens zwei aneinander angrenzenden und ineinander übergehenden Bereichen bestehen, die die Futtermischungen getrennt voneinander enthalten.

15. Verfahren nach Anspruch 14, **dadurch gekennzeichnet, dass** die Futtereinheiten nach den Ansprüchen 2 bis 13 gestaltet sind.

## Claims

1. Feed for aquatic animals which is suited to prevent selective feeding and contains in single-piece units at least two extruded feed mixtures of different composition, wherein the single-piece units consist of at least two contiguous zones that merge into each other which contain the feed mixtures separately from each other.

2. Feed according to claim 1, **characterized in that** the individual zones display different colorations.

3. Feed according to claim 1, **characterized in that** at least one zone contains fat-rich feed.

4. Feed according to claim 3, **characterized in that** the fat-rich feed contains lipophilic additives.

5. Feed according to claim 1, **characterized in that** at least one zone contains fat-poor feed.

6. Feed according to any of claims 1 to 5, **characterized in that** zones with water soluble nutrients and/or agents have a fat matrix.

7. Feed according to any of claims 1 to 6, **characterized in that** its floating and sinking behaviour is adjusted through a combination of zones of different density.

8. Feed according to claim 7, **characterized in that** the density is adjusted through a combination of zones of different fat content.

9. Feed according to claim 7, **characterized in that** the density is adjusted through a combination of zones of different expansion.

10. Feed according to any of claims 1 to 9, **characterized in that** it contains watersoluble substances that upon dissolving in water impart to the feed a propulsive force.

11. Feed according to any of claims 1 to 10, **characterized in that** it has as a first zone a fat-rich core and as a second zone a protein-foam shell.

12. Feed according to any of claims 1 to 11, **characterized in that** the at least one feed zone contains enzymes, probiotics, immunomodulators, vitamins, amino acids, fatty acids, sugar, phospholipids, proteins, antioxidants, and/or plant extracts.

13. Feed according to any of claims 1 to 12, **characterized in that** the feed unit is formed as a flake, granule, stick, pellet, or tablet.

14. Method for producing a feedstuff for aquatic animals which is suited to prevent selective feeding, **characterized in that** at least two extruded feed mixtures of different content or different coloration are converted into feed units that consists of at least two contiguous zones that merge into each other which contain the feed mixtures separately from each other.

15. Method according to claim 14, **characterized in that** the feed units are formed as in any of claims 2 to 13.

## Revendications

1. Aliment destiné à des animaux aquatiques, approprié pour éviter la prise d'aliment sélective et qui contient dans des unités en une pièce au moins deux mélanges d'aliments extrudés de compositions différentes, les unités en une pièce consistant en au moins deux zones limitrophes passant de l'une à l'autre qui contiennent les mélanges d'aliments séparément les uns des autres.

2. Aliment selon la revendication 1, **caractérisé en ce que** les différentes zones présentent des couleurs différentes.

3. Aliment selon la revendication 1, **caractérisé en ce qu'**au moins une zone contient un aliment riche en graisse.

4. Aliment selon la revendication 3, **caractérisé en ce que** l'aliment riche en graisse contient des additifs lipophiles.

5. Aliment selon la revendication 1, **caractérisé en ce qu'**au moins une zone contient un aliment pauvre en graisse.

6. Aliment selon l'une quelconque des revendications 1 à 5, **caractérisé en ce que** les zones avec des nutriments ou des principes actifs solubles dans l'eau comportent une matrice en graisse.

7. Aliment selon l'une quelconque des revendications 1 à 6, **caractérisé en ce que** son comportement de flottaison ou de submersion est ajusté par une combinaison de zones de densités différentes.

8. Aliment selon la revendication 7, **caractérisé en ce que** la densité est ajustée par une combinaison de zones de teneurs en graisse différentes.

9. Aliment selon la revendication 7, **caractérisé en ce que** la densité est ajustée par une combinaison de zones d'expansions différentes.

10. Aliment selon l'une quelconque des revendications 1 à 9, **caractérisé en ce qu'**il contient des substances solubles dans l'eau qui, en se dissolvant, confèrent à l'aliment une propulsion.

11. Aliment selon l'une quelconque des revendications 1 à 10, **caractérisé en ce qu'**il comporte comme première zone une âme riche en graisse et comme seconde zone une enveloppe en mousse de protéines.

12. Aliment selon l'une quelconque des revendications 1 à 11, **caractérisé en ce qu'**au moins une zone de l'aliment contient des enzymes, des probiotiques, des immunomodulateurs, des vitamines, des acides aminés, des acides gras, du sucre, des phospholipides, des protéines, des antioxydants et/ou des extraits de plantes.

13. Aliment selon l'une quelconque des revendications 1 à 12, **caractérisé en ce que** l'unité d'aliment est configurée comme flocon, granulé, stick, pellet ou comprimé.

14. Procédé de préparation d'un aliment destiné à des animaux aquatiques, lequel est approprié pour éviter la prise d'aliment sélective, **caractérisé en ce que** l'on transpose au moins deux mélanges d'aliments extrudés de contenu différent ou de couleur différente en des unités d'aliment consistant en au moins deux zones limitrophes passant de l'une à l'autre qui contiennent les mélanges d'aliments séparément les uns des autres.

15. Procédé selon la revendication 14, **caractérisé en ce que** les unités d'aliment sont configurées selon les revendications 2 à 13.
